(19) Europäisches Patentamt
European Patent Office
Office européen des brevets

(11) **EP 3 717 236 B1**

(12) **EUROPÄISCHE PATENTSCHRIFT**

(45) Veröffentlichungstag und Bekanntmachung des Hinweises auf die Patenterteilung:
**10.11.2021   Patentblatt 2021/45**

(21) Anmeldenummer: **18807304.3**

(22) Anmeldetag: **21.11.2018**

(51) Int Cl.:
*B32B 15/01* (2006.01)      *B32B 9/00* (2006.01)
*C04B 37/02* (2006.01)      *B32B 9/04* (2006.01)
*B32B 15/04* (2006.01)      *B32B 15/20* (2006.01)

(86) Internationale Anmeldenummer:
**PCT/EP2018/082008**

(87) Internationale Veröffentlichungsnummer:
**WO 2019/105814 (06.06.2019 Gazette 2019/23)**

(54) **VERFAHREN ZUR HERSTELLUNG EINES METALL-KERAMIK-SUBSTRATS**

METHOD FOR PRODUCING A METAL-CERAMIC SUBSTRATE

PROCÉDÉ DE FABRICATION D'UN SUBSTRAT MÉTAL-CÉRAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2017   DE 102017128316**

(43) Veröffentlichungstag der Anmeldung:
**07.10.2020   Patentblatt 2020/41**

(73) Patentinhaber: **Rogers Germany GmbH**
**92676 Eschenbach (DE)**

(72) Erfinder:
• **ENGEL, Maximilian**
**92706 Luhe-Wildenau (DE)**
• **TANG, Xinhe**
**92676 Eschenbach (DE)**
• **BRITTING, Stefan**
**91220 Schnaittach (DE)**

(74) Vertreter: **Müller Schupfner & Partner**
**Patent- und Rechtsanwaltspartnerschaft mbB**
**Bavariaring 11**
**80336 München (DE)**

(56) Entgegenhaltungen:
**WO-A1-2017/144329      DE-A1-102015 224 464**
**US-A- 5 686 190**

## Beschreibung

Die vorliegende Erfindung betrifft ein Verfahren zur Herstellung eines Metall-Keramik-Substrats.

Metall-Keramik-Substrate sind als Träger für elektrische bzw. elektronische Bauteile hinlänglich bekannt. Typischerweise umfassen solche Metall-Keramik-Substrate eine Keramikschicht mit einer Metallisierung, wobei die Keramikschicht zur Isolation und die Metallisierung zur Ausbildung von Leiterbahnen und Anschlussstellen für die elektrischen bzw. elektronischen Bauteile strukturiert ist. Zudem ist aus der DE 10 2015 224 464 A1 ein Kupfer-Keramik-Substrat bekannt, bei dem die Kupferschicht, d. h. die Metallisierung, eine erste Schicht mit einer gemittelten ersten Korngröße und eine zweite Schicht mit einer gemittelten zweiten Korngröße aufweist, wobei sich die gemittelte erste Korngröße von der gemittelten zweiten Korngröße unterscheidet. Diese Ausgestaltung ermöglicht eine Metallisierung, bei der die der Keramikschicht zugewandte Kupferschicht grobkörniger ist als die der Keramikschicht abgewandte Kupferschicht.

Dies ist insofern vorteilhaft, als dass sich mit der größeren Korngröße an der Keramikschicht eine niedrigere Dehngrenze und somit eine verbesserte Temperaturwechselbeständigkeit einstellen lässt. Folge ist eine reduzierte Wahrscheinlichkeit für eine Delamination bzw. Rissbildung zwischen der Metallisierung und der Keramikschicht bzw. innerhalb der Keramikschicht parallel zur Kupfer-Keramikgrenzfläche bei Temperaturwechseln, insbesondere auf die Grenzfläche zwischen Kupfer und Keramik. Gleichzeitig ist die feinkörnigere Keramikschicht, die die Außenseite der Metallisierung bildet, vorteilhaft für die weitere Verarbeitung mit elektrischen oder elektro-optischen Systemen, das Anbinden von elektrischen bzw. elektronischen Bauteilen an die Kupferschicht sowie den visuellen Gesamteindruck.

Zur Ausbildung der unterschiedlichen gemittelten Korngrößen wird in der DE 10 2015 224 464 A1 ein Verfahren vorgeschlagen, bei der eine Temperaturbehandlung und/oder unterschiedliche Kupferwerkstoffe vorgesehen sind, bei dem insbesondere während des Verbindungsverfahren an die Kupferschicht das Kornwachstum veranlasst wird. Auch soll das Verfahren einfacher und kostengünstiger gestaltet sein.

Von diesem Hintergrund ausgehend sieht es die vorliegende Erfindung als Aufgabe an, die aus dem Stand der Technik bekannten Metall-Keramik-Substrate bzw. das Verfahren zu deren Herstellung weiter zu verbessern, insbesondere in Hinblick auf eine für den Anwendungsfall möglichst optimal eingestellte erste bzw. zweite Korngröße.

Diese Aufgabe wird gelöst durch ein Verfahren zur Herstellung eines Metall-Keramik-Substrats gemäß Anspruch 1, ein Verfahren zur Herstellung eines Metallhalbzeugs gemäß Anspruch 9 und ein Metall-Keramik-Substrat gemäß Anspruch 10. Weitere Vorteile und Merkmale der Erfindung ergeben sich aus den Unteransprüchen sowie der Beschreibung und den beigefügten Figuren.

Erfindungsgemäß ist ein Verfahren zur Herstellung eines Metall-Keramik-Substrats vorgesehen, umfassend:

- Bereitstellen einer ersten Metallschicht, insbesondere einer ersten Kupferschicht, und einer zweiten Metallschicht, insbesondere einer zweiten Kupferschicht
- Verbinden der ersten Metallschicht und der zweiten Metallschicht zur Bildung des Metallhalbzeugs,

wobei zeitlich vor dem Verbinden der ersten Metallschicht mit der zweiten Metallschicht mittels unterschiedlicher Temperaturbehandlungen, ein Kornwachstum in der ersten Metallschicht und/oder der zweiten Metallschicht derart initiiert wird, dass sich im gefertigten Metallhalbzeug, insbesondere im gefertigten Metall-Kupfer-Substrat, eine erste Korngröße in der ersten Metallschicht von einer zweiten Korngröße in der zweiten Metallschicht unterscheidet, wobei die finale erste Korngröße und die finale zweite Korngröße erst beim Verbinden des Metallhalbzeugs mit der Keramikschicht realisiert werden.

Gegenüber dem Stand der Technik unterscheidet sich das erfindungsgemäße Verfahren dahingehend, dass bereits vor dem Verbinden der ersten und der zweiten Metallschicht untereinander ein Kornwachstum veranlasst wird, mit dem die erste Korngröße und die zweite Korngröße im späteren gefertigten Metallhalbzeug eingestellt werden können. Durch das im Vorfeld des Verbindens veranlasste Kornwachstum, lassen sich die erste Metallschicht und die zweite Metallschicht auf einfache Weise und jeweils individuell kontrolliert vorbereiten für das spätere Verbinden der ersten Metallschicht und der zweiten Metallschicht untereinander bzw. das spätere Verbinden des Metallhalbzeugs mit der Keramikschicht zur Bildung des Metall-Kupfer-Substrats.

Insbesondere gestatten die unterschiedlichen Temperaturbehandlungen im Vorfeld der Verbindung, dass die Voraussetzungen für die Ausbildung einer ersten Korngröße und einer von der ersten Korngröße unterschiedlichen zweiten Korngröße realisiert werden und die erste Metallschicht und die zweite Metallschicht im verbundenen Zustand einer gemeinsamen Temperaturbehandlung unterzogen werden können. Dabei ist es vorgesehen, dass das Kornwachstum vor dem Verbinden durch die Temperaturbehandlung nicht bis zur gewünschten finalen ersten bzw. zweiten Korngröße durchgeführt wird, sondern die finale erste bzw. zweite Korngröße erst bei dem Verbinden der ersten Metallschicht mit der zweiten Metallsicht bzw. beim Verbinden des Metallhalbzeugs mit der Keramikschicht realisiert wird. Unter der finalen ersten bzw. zweiten Korngröße versteht der Fachmann vorzugsweise die Korngröße, die im gefertigten Metallhalbzeug bzw. im gefertigten Metall-Kupfer-Halbzeug vorliegt. Insbesondere ist es vorgesehen, dass ausschließlich in der zweiten Metallschicht das Kornwachstum initiiert wird und die Temperaturbehandlung der ersten Metallschicht in einem Bereitstellen der ersten Metallschicht bei Raumtemperatur besteht.

Grundsätzlich ist es vorstellbar, dass weitere zweite Metallschichten vorgesehen sind, die im gefertigten Metallhalbzeug zwischen der ersten und der zweiten Metallschicht angeordnet sind. Dabei sind insbesondere die der zweiten Metallschicht zugewandten weiteren zweiten Metallschichten einer vorbereitenden Temperaturbehandlung unterzogen. Vorzugsweise ist es hierbei vorgesehen, dass das gefertigte Metallhalbzeug aus der ersten und zweiten Metallschicht eine in Schichtrichtung bemessene Dicke aufweist, die kleiner ist als 5mm, bevorzugt kleiner ist als 3 mm und besonders bevorzugt kleiner als 1mm cm. Ferner lässt sich beim Zusammenfügen der ersten Metallschicht und der zweiten Metallschicht gezielt ein gewünschtes Verhältnis zwischen einer in Schichtrichtung bzw. Stapelrichtung bemessenen ersten Schichtdicke der ersten Metallschicht und einer in Schichtrichtung bzw. Stapelrichtung bemessenen zweiten Schichtdicke der zweiten Metallschicht einstellen. Vorzugsweise ist die erste Metallschicht dicker als die zweite Metallschicht, vorzugsweise 1,1 bis 15-mal so dick, bevorzugt 2 bis 10-mal so dick und besonders bevorzugt 3 bis 8-mal so dick, oder die zweite Metallschicht ist dicker als die erste Metallschicht, vorzugsweise 1,1 bis 15-mal so dick, bevorzugt 2 bis 10-mal so dick und besonders bevorzugt 3 bis 8-mal so dick.

Gemäß einer weiteren Ausführungsform der vorliegenden Erfindung ist es vorgesehen, dass die erste Metallschicht und die zweite Metallschicht aus demselben Metallwerkstoff gefertigt sind. Dadurch ist es in vorteilhafter Weise möglich, beim Verbinden der ersten Metallschicht und der zweiten Metallschicht zur Bildung eines Korngrößengradienten auf Abstriche bei der Materialwahl der ersten oder der zweiten Metallschicht zu verzichten. Insbesondere entsprechen sich die erste Metallschicht und die zweite Metallschicht in Hinblick auf ihren Sauerstoffgehalt oder Reinheitsgrads. Beispielsweise ist es denkbar, dass die erste und die zweite Metallschicht aus hochreinem Kupfer wie Cu-OFE (Cu ≥ 99,99 Gew.%) gefertigt sind. Zur Beeinflussung des Kornwachstums ist es von Vorteil, wenn der ersten und/oder zweiten Metallschicht ein Kornfeinungmittel bzw. Körnungskeime beigefügt sind, die ein Kornwachstum in der jeweiligen Metallschicht begrenzen. Vorzugsweise sind das Kornfeinungsmittel bzw. die Körnungskeime in derartigen Mengen beigefügt, dass sie zwar das Kornwachstum beeinflussen, aber keinen Einfluss auf die mechanischen und elektrischen Eigenschaften der ersten und der zweiten Metallschicht nehmen. Bevorzugt ist die Menge der Kornfeinungsmittel bzw. der Körnungskeime gleich oder die Menge an Kornfeinungsmittel bzw. die Körnungskeime in der ersten Metallschicht ist 1,5 bis 15.000 mal, bevorzugt 2 bis 2.000 mal und besonders bevorzugt 4 bis 100 mal so groß wie die Menge an Mitteln zur Beeinflussung der Kornfeinungsmittel bzw. die Körnungskeime in der zweiten Metallschicht. Weiterhin ist es vorzugsweise vorgesehen, dass die Menge an Kornfeinungsmittel bzw. die Körnungskeime in der zweiten Metallschicht bzw. der zweiten Metallschicht weniger als 1,5 Gew. -%, bevorzugt weniger als 1,0 Gew. -% und besonders bevorzugt weniger als 0,1 Gew.-% beträgt. Unter der ersten Korngröße bzw. der zweiten Korngröße ist insbesondere eine gemittelte Korngröße im Metall der ersten bzw. der zweiten Metallschicht zu verstehen.

Insbesondere versteht der Fachmann unter einem feinen Gefüge eine Metallschicht mit einer vergleichsweise geringen durchschnittlichen Korngröße, insbesondere mit einer Ausdehnung bzw. Dimension von weniger als 100 $\mu$m, und unter einem groben Gefüge eine Metallschicht mit einer vergleichsweise großen durchschnittlichen Korngröße, vorzugsweise mit einer Ausdehnung bzw. Dimension von mehr als 100 $\mu$m. Weiterhin ist es vorzugsweise vorgesehen, dass in der ersten Metallschicht die erste durchschnittliche Korngröße und in der zweiten Metallschicht die zweite durchschnittliche Korngröße, insbesondere in einer parallel und/oder senkrecht zur Schichtrichtung verlaufenden Richtung, im Wesentlichen jeweils konstant ist. Dies lässt sich mit Vorteil durch eine gleichmäßige Verteilung der Mittel zur Beeinflussung der Korngröße realisieren. Es ist aber auch vorstellbar, dass mittels einer gezielten lokalen Verteilung des Mittels zur Beeinflussung der Korngröße eine gewünschte Korngrößenverteilung innerhalb der ersten Metallschicht bzw. der zweiten Metallschicht realisieren lässt.

Zweckmäßig ist es vorgesehen, dass die erste durchschnittliche Korngröße kleiner ist als die zweite durchschnittliche Korngröße ist. Vorzugsweise ist die zweite durchschnittliche Korngröße zwischen 160 und 2.000 $\mu$m, bevorzugt zwischen 200 und 1.000 $\mu$m und besonders bevorzugt zwischen 250 und 500 $\mu$m groß. Weiterhin ist es bevorzugt vorgesehen, das die erste durchschnittliche Korngröße zwischen 50 und 200 $\mu$m, bevorzugt zwischen 70 und 150 $\mu$m und besonders bevorzugt zwischen 80 und 120 $\mu$m groß ist. Die durchschnittliche Korngröße ermittelt sich dabei als Mittelwert über die entlang einer senkrecht zur Schichtrichtung verlaufenden Ebene verteilten Körnungen.

In einer weiteren Ausführungsform der vorliegenden Erfindung ist es vorgesehen, dass die zweite Metallschicht dicker ist als die erste Metallschicht, vorzugsweise 1,1 bis 15-mal so dick, bevorzugt 2 bis 10-mal so dick und besonders bevorzugt 3 bis 8-mal so dick. Dadurch wird der zweiten Metallschicht mit seiner größeren ersten durchschnittlichen Korngröße ein entsprechender Bauraum zur Verfügung gestellt, während bei der ersten Metallschicht berücksichtigt wird, dass die feinere Gefügestruktur weniger Bauraum benötigt

Vorzugsweise handelt es sich bei dem Kornfeinungsmittel um ein Legierungsmetall mit einer vergleichsweise hohen Sauerstoffaffinität und einer möglichst geringen Randlöslichkeit. Dadurch lässt sich die erforderliche Menge an Kornfeinungsmittel möglichst gering halten, so dass das Metall der ersten Metallschicht und der zweiten Metallschicht nicht derart verunreinigt wird, dass die erste Metallschicht und die zweite Metallschicht nicht als Metallisierung in der Leistungselektronik geeignet sind. Insbesondere hat sich herausgestellt, dass bei den Kornfeinungsmitteln B, Ca, Fe, Cr, und Zirkonarsenid, mindestens einige Promille zugesetzt werden müssen, um das Kornwachstum entscheidend zu beeinflussen, so dass nach deren Zugabe im Fall von Kupfer als Metall für die erste und die zweite Metallschicht kein Cu OFE bzw. Cu PHC mehr vorliegt. Im Gegensatz dazu hat sich herausgestellt, dass Legierungsmetallen, wie z.B. Titan, Zirkonium, Hafnium, Chrom und/oder Niobium in bereits geringen Mengen zur Ausbildung von bestimmten Korngrößen in der gewünschten Größe geeignet sind. Vorzugsweise ist der in Gewichtsprozent bemessene Anteil des Kornfeinungsmittels in der ersten oder zweiten Metallschicht kleiner als 2,5 Gew.-%, bevorzugt kleiner als 1,5 Gew.-% und besonders bevorzugt kleiner als 1 Gew.-% oder sogar kleiner als 0,5 Gew.-%. Beispielsweise ist der Anteil des Kornfeinungsmittels in der ersten Metallschicht bzw. der zweiten Metallschicht, insbesondere für eine erste Metallschicht und einer zweite Metallschicht aus Cu-OFE,

- für Titan kleiner als 2,1 Gew.-%,
- für Zirkonium kleiner als 0,17 Gew.-%,
- für Hafnium kleiner als 1,1 Gew.-%,
- für Chrom kleiner als 0,73 Gew.-% und/oder
- für Niobium kleiner als 0,15 Gew.-%,

zusammen oder einzeln aber bevorzugt jeweils weniger als 0,01 Gew.-%.

In einer weiteren Ausführungsform der vorliegenden Erfindung ist es vorgesehen, dass die Temperaturbehandlung ein Glühprozess ist, wobei sich vorzugsweise der Glühprozess für die erste Metallschicht von dem Glühprozess für die zweite Metallschicht unterscheidet. Insbesondere handelt es sich bei dem Glühprozess um ein Erhitzen der ersten und/oder der zweiten Metallschicht über die Rekristallisationstemperatur. Vorzugsweise wird ausschließlich die zweite Metallschicht dem Glühprozess unterzogen. Es ist aber auch vorstellbar, dass sich der Glühprozess für die erste Metallschicht und die zweite Metallschicht z. B. in Hinblick auf eine Dauer, eine Temperaturführung und/oder eine Temperaturhöhe unterscheiden und so jeweils ein verschieden ausgeprägtes Kornwachstum in der ersten Metallschicht und der zweiten Metallschicht realisiert wird.

Besonders bevorzugt ist es vorgesehen, dass die Metallschichtstruktur aus Kupfer gefertigt ist, d. h. die erste Metallschicht eine erste Kupferschicht und die zweite Metallschicht eine zweite Kupferschicht ist. Denkbar ist auch, dass sich die Metallzusammensetzung in der ersten Metallschicht unterscheidet von der Metallzusammensetzung in der zweiten Metallschicht.

Vorzugsweise ist es vorgesehen, dass die Temperaturbehandlung zumindest zeitweise in einer inerten Gasumgebung oder in einem Vakuum durchgeführt wird. Dadurch lässt sich mit Vorteil ein definiertes Kornwachstum während der Temperaturbehandlung realisieren. Dies verbessert mit Vorteil das kontrollierte Einstellen der ersten bzw. der zweiten Korngröße im gefertigten Metallhalbzeug bzw. gefertigten Metall-Keramik-Substrat.

In einer weiteren Ausführungsform der vorliegenden Erfindung ist es vorgesehen, dass die erste Metallschicht mit der zweiten Metallschicht mittels eines DCB-Verfahrens verbunden wird. Dadurch kann mit Vorteil z. B. auf ein andernfalls für das Verbinden der ersten Metallschicht und der zweiten Metallschicht notwendiges Walzen bzw. die dazu erforderlichen Einrichtungen verzichtet werden. Unter einem "DCB-Verfahren" (Direct-Copper-Bond-Technology) versteht der Fachmann ein solches Verfahren, das beispielsweise zum Verbinden von Metallschichten oder -blechen (z. B. Kupferblechen oder -folien) miteinander und/oder mit Keramik oder Keramikschichten dient, und zwar unter Verwendung von Metall- bzw. Kupferblechen oder Metall- bzw. Kupferfolien, die an ihren Oberflächenseiten eine Schicht oder einen Überzug (Aufschmelzschicht) aus einer chemischen Verbindung aus dem Metall und einem reaktiven Gas, bevorzugt Sauerstoff, aufweisen. Bei diesem beispielsweise in der US-PS 37 44 120 oder in der DE-PS 23 19 854 beschriebenen Verfahren bildet diese Schicht oder dieser Überzug (Aufschmelzschicht) ein Eutektikum mit einer Schmelztemperatur unter der Schmelztemperatur des Metalls (z. B. Kupfers), so dass durch Auflegen der Folie auf die Keramik und durch Erhitzen sämtlicher Schichten diese miteinander verbunden werden können, und zwar durch Aufschmelzen des Metalls bzw. Kupfers im Wesentlichen nur im Bereich der Aufschmelzschicht bzw. Oxidschicht.

Insbesondere weist das DCB-Verfahren dann z. B. folgende Verfahrensschritte auf:

- Oxidieren einer Kupferfolie derart, dass sich eine gleichmäßige Kupferoxidschicht ergibt;
- Auflegen des Kupferfolie auf die Keramikschicht;
- Erhitzen des Verbundes auf eine Prozesstemperatur zwischen etwa 1025 bis 1083°C, z. B. auf ca. 1071°C;
- Abkühlen auf Raumtemperatur.

Weiterhin ist es bevorzugt vorgesehen, dass die erste Metallschicht und/oder die zweite Metallschicht zeitlich vor dem Verbinden oxidiert, insbesondere chemisch und/oder thermisch oxidiert, werden. Vorzugsweise ist es vorgesehen, dass die Oxidation zwischen der Temperaturbehandlung und dem Verbinden der ersten Metallschicht mit der zweiten Metallschicht durchgeführt wird. Durch die Oxidation ist es mit Vorteil auf einfache Weise möglich, eine eutektische Schicht bereitzustellen, die z. B. die Verbindung der ersten Metallschicht und der zweiten Metallschicht oder der zweiten Metallschicht mit der Keramikschicht gestattet.

Zweckmäßig ist es vorgesehen, dass zur Begrenzung der zweiten Korngröße eine Temperaturführung bei der Temperaturbehandlung der zweiten Metallschicht angepasst wird und/oder die zweite Metallschicht mit einer Paste aus einem Metall und einem Metalloxid, insbesondere aus Kupfer und Kupferoxid, beschichtet wird. Der Vorteil der Begrenzung der zweiten Korngröße besteht darin, dass dadurch beim Verbinden an die Keramikschicht ein Einstellen eines niedrigen Sauerstoffgehalt nicht zwingend erforderlich wird, um einer Schwächung der zweiten Metallschicht bzw. einer Rissbildung an der zweiten Metallschicht entgegenzuwirken. Diese Verwendung eines entsprechend niedrigen Sauerstoffgehalts wäre andernfalls wegen der mit steigender Korngröße abnehmende Fläche der Korngrenzen in der zweiten Metallschicht und der bevorzugten Anlagerung des Sauerstoffs aus der eutektischen Beschichtung an den Korngrenzen des Metalls in der zweiten Metallschicht erforderlich. Daher kann mit den Beschränkung der zweiten Korngröße mit Vorteil dem Einstellen des entsprechenden Sauerstoffgehalts entgegengewirkt werden, so dass das Verfahren zur Herstellung der Verbindung vereinfacht werden kann.

Ein weiterer Aspekt der vorliegenden Erfindung ist ein Verfahren zur Herstellung eines Metall-Keramik-Substrats, insbesondere eines Kupfer-Keramik-Substrats, umfassend die Schritte:

- Bereitstellen einer ersten Metallschicht, insbesondere einer ersten Kupferschicht, und einer zweiten Metallschicht, insbesondere einer zweiten Kupferschicht,
- Verbinden der ersten und/oder der zweiten Metallschicht mit einer Keramikschicht zur Bildung des Metall-Keramik-Substrats,

wobei zeitlich vor dem Verbinden der ersten Metallschicht mit der zweiten Metallschicht mittels unterschiedlicher Temperaturbehandlungen, ein Kornwachstum in der ersten Metallschicht und/oder der zweiten Metallschicht derart initiiert wird, dass sich im gefertigten Metallhalbzeug, insbesondere im gefertigten Metall-Kupfer-Substrat, eine erste Korngröße in der ersten Metallschicht von eine zweiten Korngröße in der zweiten Metallschicht unterscheidet. Alle für das erfindungsgemäße Verfahren zur Herstellung des Metallhalbzeugs beschriebenen Merkmale und deren Vorteile lassen sich sinngemäß ebenfalls auf das erfindungsgemäße Verfahren zur Herstellung des Metall-Keramik-Substrats übertragen.

Grundsätzlich ist es dabei vorstellbar, dass die erste Metallschicht und die zweite Metallschicht als Metallhalbzeug, insbesondere hergestellt mit dem erfindungsgemäß Verfahren, an die Keramikschicht angebunden werden oder die erste Metallschicht, die zweite Metallschicht und die Keramikschicht in einem gemeinsamen Verbindungsschritt, vorzugsweise in einem gemeinsamen DCB-Verfahren, miteinander verbunden werden. Sofern die erste Metallschicht und die zweite Metallschicht als Metallhalbzeug mit der Keramikschicht verbunden werden, kann beispielsweise ein AMB-Verfahren oder ein DCB-Verfahren herangezogen werden. Unter einem Aktivlot-Verfahren, d. h. "active metal brazing (AMB)"-Verfahren, z. B. zum Verbinden von Metallschichten oder Metallfolien, insbesondere auch von Kupferschichten oder Kupferfolien mit Keramikmaterial, ist ein Verfahren zu verstehen, welches speziell auch zum Herstellen von Metall-Keramik-Substraten verwendet wird. Dabei wird bei einer Temperatur zwischen ca. 650-1000°C eine Verbindung zwischen einer Metallfolie, beispielsweise Kupferfolie, und einem Keramiksubstrat, beispielsweise einer Aluminiumnitrid-Keramik, unter Verwendung eines Hartlots hergestellt, welches zusätzlich zu einer Hauptkomponente, wie Kupfer, Silber und/oder Gold auch ein Aktivmetall enthält. Dieses Aktivmetall, welches beispielsweise wenigstens ein Element der Gruppe Hf, Ti, Zr, Nb, Ce ist, stellt durch chemische Reaktion eine Verbindung zwischen dem Lot und der Keramik her, während die Verbindung zwischen dem Lot und dem Metall eine metallische Hartlöt-Verbindung ist.

Entsprechend verhindert die Ausgestaltung der ersten Metallschicht mit einer geringeren durchschnittlichen ersten Korngröße im Vergleich zur zweiten Metallschicht, dass ein zu grobes Gefüge in der ersten Metallschicht eine Anbindung von elektronischen Bauteilen, insbesondere beim Dünndrahtbonding, erschwert. Außerdem vereinfacht ein vergleichsweise feines Gefüge eine automatische optische Inspektion (AOI), d. h. eine Prüfung der Metall-Keramik-Substrate nach dessen Fertigung. Gleichzeitig wird ein Korngrößengradient entlang einer Schichtrichtung, entlang der die erste Metallschicht und die zweite Metallschicht auf das Trägerelement geschichtet werden, beim Anbinden der Metallschichtstruktur gebildet.

Dabei lässt sich im Sinne der Hall-Petch-Beziehung $R_e = \sigma_0 + \frac{K}{\sqrt{d_k}}$; mit einer Streckgrenze $R_e$, einer Startspannung $\sigma_0$, einem Korngrenzwiderstand $K$ und einer Korngröße $d_k$), die eine in der Metallschicht vorliegende innere Spannung in Verbindung setzt mit einer Korngröße des Gefüges, ein vergleichsweise grobes Gefüge in der zweitem Metallschicht realisieren, wodurch mit Vorteil ein Spannungsniveau in einem Anbindungsbereich, in dem die zweite Metallschicht an das Trägerelement angebunden ist, reduziert wird.

Bei der Keramik aus der die Keramikschicht gebildet wird, kann es sich beispielsweise um $Al_2O_3$, $Si_3N_4$, AlN oder eine HPSX-Keramik (, d. h. einer Keramik mit einer $Al_2O_3$- Matrix, die einen x-prozentigen Anteil an $ZrO_2$ umfasst, beispielsweise $Al_2O_3$ mit 9% $ZrO_2$ = HPS9 oder $Al_2O_3$ mit 25% $ZrO_2$ = HPS25) handeln. Das Trägerelement weist vorzugsweise eine vergleichsweise hohe elektrische Isolationsfestigkeit auf, bevorzugt von mehr als 5 kV/mm, besonders bevorzugt von mehr als 10, 20 oder sogar mehr als 30 kV/mm und/oder mit hoher Wärmeleitfähigkeit auf, bevorzugt von mehr als 10 W/mK, besonders bevorzugt von mehr als 20 oder sogar mehr als 60 W/mK, wie z.B. technische Keramiken oder mit wärmeleitenden Materialen gefüllte organische Isolationswerkstoffe.

Gemäß einer weiteren Ausführungsform der vorliegenden Erfindung ist es vorgesehen, dass die zweite Metallschicht im gefertigten Metall-Keramik-Substrat an der Keramikschicht angebunden ist, wobei im gefertigten Metall-Keramik-Substrat durch den Glühprozess vor dem Verbinden der ersten Metallschicht mit der zweiten Metallschicht eine gegenüber der ersten Korngröße größere zweite Korngröße in der zweiten Metallschicht realisiert wird. Dadurch lässt sich mit Vorteil die grobkörnigere zweite Metallschicht an die Keramikschicht anbinden, während die von der Keramikschicht abgewandte erste Metallschicht gegenüber der zweiten Metallschicht feinkörniger ist.

Ein weiterer Gegenstand der vorliegenden Erfindung ist ein Metall-Keramik-Substrats hergestellt mit einem erfindungsgemäßen Verfahren umfassend

- eine Keramikschicht und
- ein an der Keramikschicht angebundener Verbund aus einer ersten Metallschicht und einer zweiten Metallschicht, wobei eine zweite Korngröße in der zweiten Metallschicht größer ist als die erste Korngröße in der ersten Metallschicht. Alle für das erfindungsgemäße Verfahren zur Herstellung des Metall-Keramik-Substrats beschriebenen Merkmale und deren Vorteile lassen sich sinngemäß ebenfalls auf das erfindungsgemäße Metall-Keramik-Substrat übertragen.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Es zeigt:

**Fig.1 bis 5:** Verfahrensschritte eines Verfahren zur Herstellung eines Metall-Keramik-Substrats gemäß einer beispielhaften Ausführungsform der vorliegende Erfindung und

**Fig. 6** eine Schnittansicht eines Metall-Keramiksubstrats gemäß einer beispielhaften Ausführungsform der vorliegende Erfindung

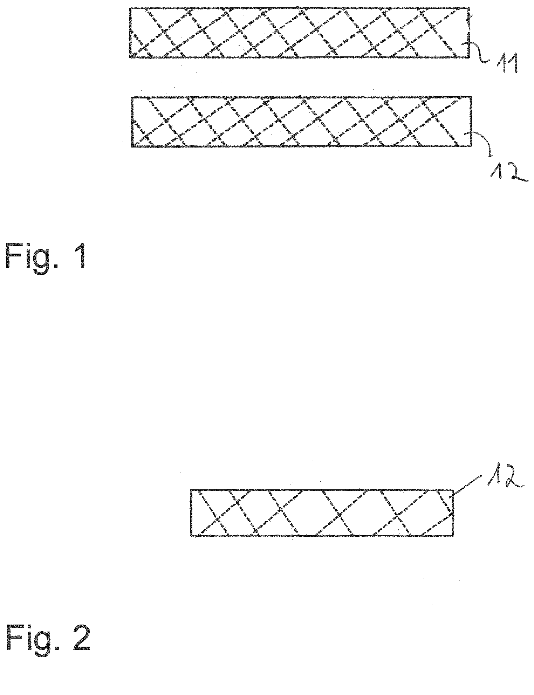

In den **Figuren 1 bis** 5 sind Verfahrensschritte eines Verfahrens zur Herstellung eines Metall-Keramik-Substrats 1 gemäß einer ersten beispielhaften Ausführungsform der vorliegenden Erfindung dargestellt. Solche Metall-Keramik-Substrate 1 dienen als Träger für elektrische bzw. elektronische Bauteile. Zur elektrisch leitenden Verbindung der einzelnen elektrischen bzw. elektronischen Bauteile sind dabei insbesondere Metallisierungen zur Ausbildung von Leiterbahnen an einer Keramikoberfläche bzw. -oberseite 15 einer Keramikschicht 10 vorgesehen. Insbesondere ist die Metallisierung dabei strukturiert, um Leiterbahnen oder Befestigungsstellen für die elektronischen bzw. elektrischen Bauteile bereitzustellen.

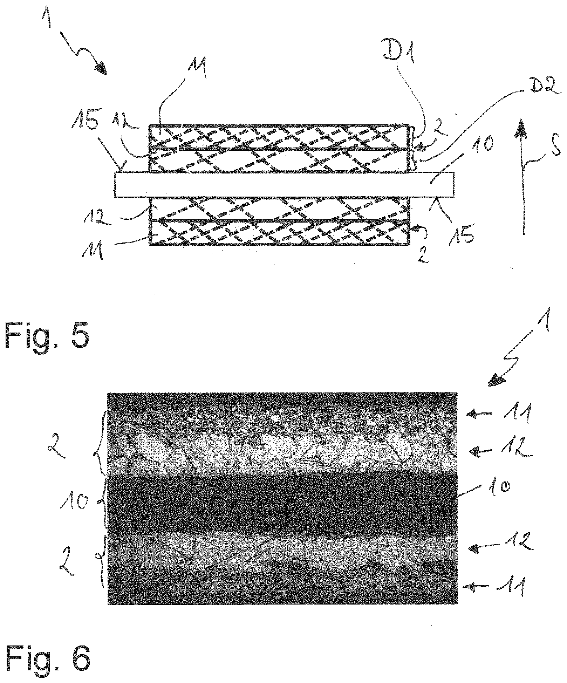

Hierbei hat es sich als vorteilhaft erwiesen, wenn die auf der Keramikschicht angebrachte Metallisierung eine erste Metallschicht 11 und eine zweite Metallschicht 12 aufweist, wobei sich eine erste Korngröße in der ersten Metallsicht 11, d. h. eine erste durchschnittliche Korngröße des Metalls in der ersten Metallschicht 11, von einer zweiten Korngröße, d. h. einer zweite durchschnittliche Korngröße des Metalls in der zweiten Metallschicht 12, unterscheidet. Insbesondere ist es vorgesehen, dass die erste Metallschicht 11 und die zweite Metallschicht 12 zur Bildung der Metallisierung auf der Keramikschicht 10 einen Verbund 2, insbesondere eine Sandwichstruktur, ausbilden, d. h. im gefertigten Zustand sind die erste Metallschicht 11 und die zweite Metallschicht 12 in einer senkrecht zur Keramikoberfläche 15 verlaufenden Stapelrichtung S übereinander geschichtet bzw. gestapelt. In der Figur 6 ist ein Metall-Keramik-Substrat 1 dargestellt, bei dem sowohl an der Unterseite als auch an der Oberseite ein solcher Verbund 2 aus der ersten Metallschicht 11 und der zweiten Metallschicht 12 angeordnet ist. Dabei ist jeweils die zweite Metallschicht 12 der Keramikschicht 10 zugewandt und die erste Metallschicht 11 der Keramikschicht 10 abgewandt, wobei insbesondere eine durchschnittliche erste Korngröße in der ersten Metallschicht 11 kleiner ist als die durchschnittliche zweite Korngröße in der zweiten Metallschicht 12.

Durch die gegenüber der zweiten Metallschicht 12 feinkörnigere Ausgestaltung der ersten Metallschicht 11 ist es mit Vorteil einfacher, eine Anbindung eines elektronischen bzw. elektrischen Bauteils an die Metallisierung zu realisieren. Zudem lässt sich eine visuell erfassbar homogener bzw. feinere Deckschicht für die Metallisierung auf der Keramikschicht 10 bereitstellen. Gleichzeitig ist es in vorteilhafter Weise möglich durch die gegenüber der ersten Metallschicht 11 grobkörnigere zweite Metallschicht 12, die Verbindung der Metallisierung und der Keramikschicht derart auszulegen, dass sie trotz der unterschiedlichen thermischen Ausdehnungskoeffizienten in Hinblick auf ihre Temperaturwechselbeständigkeit optimiert ist. D.h. die zweite Korngröße ist vorzugsweise derart ausgewählt, dass die mechanische Spannung, die bedingt durch unterschiedliche thermische Ausdehnungskoeffizienten veranlasst wird, möglichst gering gehalten wird. Dies erhöht mit Vorteil die Lebensdauer des Metall-Keramik-Substrats 1. Dabei ist es auch vorstellbar, dass die zweite Korngröße in etwa einer zweiten Schichtdicke D2 der zweiten Metallschicht 12 entspricht. Weiterhin ist es vorgesehen das die zweite Schichtdicke D2 größer ist als eine erste Schichtdick D1 der ersten Metallschicht 11. Denkbar ist beispielsweise auch, dass die erste Korngröße einen Wert von weniger

als 100 μm, bevorzugt von 50 μm annimmt und/oder die zweite Korngröße einen Wert von mehr als 100 μm, bevorzugt zwischen 250 und 1000 μm annimmt.

Zu gezielten Steuerung der ersten Korngröße bzw. der zweiten Korngröße, insbesondere eines Verhältnisses zwischen der ersten Korngröße und der zweite Korngröße, ist es vorgesehen, dass die erste Metallschicht 11 und die zweite Metallschicht 12, vorzugsweise in Form eines ersten Metallblechs und des zweiten Metallblechs, bereitgestellt werden (siehe Figur 1). Dabei sind das erste Metallblech und das zweite Metallblech aus demselben Metallwerksoff bzw. haben dieselben Spezifikation, z. B. in Hinblick auf ihren Sauerstoffgehalt bzw. ihre Reinheit, gefertigt. Beispielsweise handelt es sich bei der ersten und der zweite Metallschicht um Cu-OFE, Cu-OF oder Cu-ETP. Figur 2 zeigt, dass die zweite Metallschicht, insbesondere ausschließlich die zweite Metallschicht, einer Temperaturbehandlung unterzogen (siehe Figur 2) wird. Die Temperaturbehandlung umfasst vorzugsweise einen Glühprozess, bei dem die zweite Metallschicht zumindest zeitweise auf eine Temperatur oberhalb der Rekristallationstemperatur erhitzt wird. Durch diesen Glühprozess wird mit Vorteil ein Kornwachstum in der zweiten Metallschicht initiiert und bis zu einem durch die Temperaturbehandlung festgelegten Ausmaß vollzogen. Vorzugsweise erfolgt der Glühprozess dabei in einer inerten Gasumgebung oder im Vakuum. Dadurch wird in der zweiten Metallschicht 12 bereits vor dem Verbinden der ersten Metallschicht 11 und der zweiten Metallschicht 12 ein Kornwachstum, zumindest teilweise, vollzogen. Für ein möglichst gleichmäßiges Korngefüge in der ersten Metallschicht 11 und/oder der zweiten Metallschicht 12 ist es vorgesehen, dass der ersten Metallschicht 11 und/oder der zweiten Metallschicht 12 ein Kornfeinungsmittel bzw. Körnungskeime beigefügt sind. Insbesondere sind das Kornfeinungsmittel bzw. die Körnungskeime derart ausgewählt, dass sie mit Ausnahme ihres Einflusses auf das Kornwachstum die mechanischen und elektrischen Eigenschaften der ersten Metallschicht und/oder der zweiten Metallschicht nicht beeinflussen. Beispielsweise handelt es sich bei dem Kornfeinungsmittel um, Cr, Ti, Zr, Hf, Nb, .

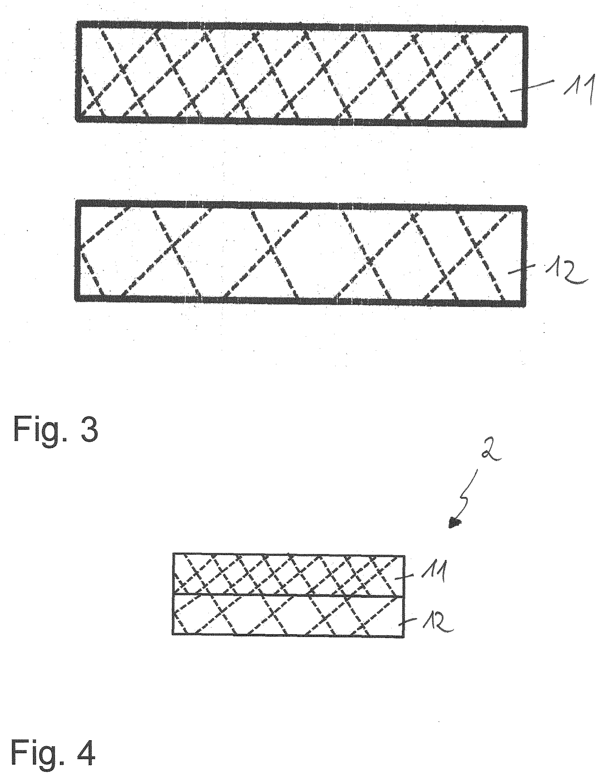

In einem in Figur 3 dargestellten Verfahrensschritt werden die erste Metallschicht 11 und die zweite Metallschicht 12 jeweils einer thermischen und/oder chemischen Oxidation unterzogen, um eine für das Verbinden im DCB-Verfahren erforderliche eutektische Schicht, insbesondere aus Cu und O, auszubilden. Sofern zur Oxidation für die zweite Metallschicht 12 eine weitere Temperaturbehandlung vorgesehen ist, ist es bevorzugt vorgesehen, dass die Temperaturbehandlung zur Initiation des Kornwachstums und die Temperaturbehandlung zur Oxidation miteinander abgestimmt sind, um eine gewünschte zweite Korngröße zu begrenzen und so ein Riesenkornwachstum zu vermeiden, da zu große zweite Korngrößen wegen der Reduktion der Fläche der Korngrenzen einen vergleichsweise niedrigen Sauerstoffgehalt beim Anbinden der zweite Metallschicht 12 an die Keramikschicht 10 erforderlich machen würden, um einer Schwächung bzw. sogar Rissbildung in der zweiten Metallschicht 12 entgegenzuwirken. Alternativ ist es auch denkbar, dass eine Paste aus Metall und Metalloxid, insbesondere Cu und CuO, auf die zweite Metallschicht 12 aufgetragen wird, um so eine eutektische Zusammensetzung zu realisieren, ohne dass eine Oxidation der zweiten Metallschicht 12 erforderlich ist.

In der Figur 4 ist das Verbinden der ersten Metallschicht 11 und der zweiten Metallschicht 12 zur Bildung des Metallhalbzeugs 2 dargestellt. Hierbei werden die erste Metallschicht 11 und die zweite Metallschicht 12 in einem DCB-Verfahren miteinander verbunden. In der Figur 5 ist ein Metall-Keramik-Substrat 1 schematisch dargestellt, bei dem jeweils auf einer Oberseite und einer Unterseite der Keramikschicht ein Metallverbund 2 angeordnet ist. Hierbei ist es vorstellbar, dass die ersten Metallschichten 11, die zweiten Metallschichten 12 und die Keramikschichten 10 in einem gemeinsamen Anbindungsverfahren, insbesondere einem gemeinsamen DCB-Verfahren miteinander verbunden werden. Alternativ ist es auch denkbar, dass die erste Metallschicht 11 und die zweite Metallschicht 21 als Metallhalbzeug 2 aus Figur 4 bereitgestellt werden und die Metallhalbzeuge 2 in einem separaten Verfahrensschritt, beispielsweise mittels eines DCB-Verfahrens oder eines AMB Verfahrens, an die Kupferschicht 10 angebunden werden.

| | |
|---|---|
| 1 | Metall-Keramik-Substrat |
| 2 | Metallhalbzeug |
| 10 | Keramikschicht |
| 11 | erste Metallschicht |
| 12 | zweite Metallschicht |
| 15 | Keramikoberseite |
| S | Stapelrichtung |
| D1 | erste Schichtdicke |
| D2 | zweite Schichtdicke |

**Patentansprüche**

1. Verfahren zur Herstellung eines Metall-Keramik-Substrats, umfassend:

   - Bereitstellen einer ersten Metallschicht (11), insbesondere einer ersten Kupferschicht, und einer zweiten Metallschicht (12), insbesondere einer zweiten Kupferschicht,
   - Verbinden der ersten Metallschicht (11) und der zweiten Metallschicht (12) zur Bildung des Metallhalbzeugs (2),

   wobei zeitlich vor dem Verbinden der ersten Metallschicht (11) mit der zweiten Metallschicht (12) mittels unterschiedlicher Temperaturbehandlungen, ein Kornwachstum in der ersten Metallschicht (11) und/oder der zweiten Metallschicht (12) derart initiiert wird, dass sich im gefertigten Metall-Kupfer-Substrat, eine erste Korngröße in der ersten Metallschicht (11) von einer zweiten Korngröße in der zweiten Metallschicht (12) unterscheidet, wobei die finale erste Korngröße und die finale zweite Korngröße erst beim Verbinden des Metallhalbzeugs mit der Keramikschicht realisiert werden.

**2.** Verfahren gemäß Anspruch 1, wobei die erste Metallschicht (11) und die zweite Metallschicht (12) aus demselben Metallwerkstoff, insbesondere Kupfer, gefertigt sind.

**3.** Verfahren gemäß einem der vorhergehenden Ansprüche, wobei die Temperaturbehandlung ein Glühprozess ist, wobei vorzugsweise sich der Glühprozess für die erste Metallschicht (11) von dem Glühprozess für die zweite Metallschicht (12) unterscheidet.

**4.** Verfahren gemäß einem der vorhergehenden Ansprüche, wobei die Temperaturbehandlung zumindest zeitweise in einer inerten Gasumgebung oder in einem Vakuum durchgeführt wird.

**5.** Verfahren gemäß einem der vorhergehenden Ansprüche, wobei die erste Metallschicht (11) mit der zweiten Metallschicht (12) mittels eines DCB-Verfahrens verbunden wird.

**6.** Verfahren gemäß einem der vorhergehenden Ansprüche, wobei die erste Metallschicht (11) und/oder die zweite Metallschicht (12) zeitlich vor dem Verbinden oxidiert werden.

**7.** Verfahren gemäß einem der vorhergehenden Ansprüche, wobei zur Begrenzung der zweiten Korngröße eine Temperaturführung bei der Temperaturbehandlung der zweiten Metallschicht (12) angepasst wird und/oder die zweite Metallschicht (12) mit einer Paste aus einem Metall und einem Metalloxid, insbesondere aus Kupfer und Kupferoxid, beschichtet wird.

**8.** Verfahren gemäß einem der vorhergehenden Ansprüche, wobei die zweite Metallschicht (12) im gefertigten Metall-Keramik-Substrat (1) an der Keramikschicht (10) angebunden ist, wobei im gefertigten Metall-Keramik-Substrat (1) durch den Glühprozess vor dem Verbinden der ersten Metallschicht (11) mit der zweiten Metallschicht (12) eine gegenüber der ersten Korngröße größere zweite Korngröße in der zweiten Metallschicht (12) realisiert wird.

**Claims**

**1.** A method for producing a metal-ceramic substrate, comprising the steps of:

- providing a first metal layer (11), especially a first copper layer, and a second metal layer (12), especially a second copper layer,
- joining the first metal layer (11) and the second metal layer (12) to form the semi-finished metal product (2),

wherein, prior to joining the first metal layer (11) and the second metal layer (12) using different temperature-based treatments, grain growth is initiated in the first metal layer (11) and/or the second metal layer (12) such that a first grain size in the first metal layer (11) is different from a second grain size in the second metal layer (12) in the fabricated metal-copper substrate, the final first grain size and the final second grain size being realized not before joining the semi-finished metal product and the ceramic layer.

**2.** The method according to claim 1, wherein the first metal layer (11) and the second metal layer (12) are made of the same metal material, and especially are made of copper.

**3.** The method according to one of the preceding claims, wherein the temperature-based treatment is an annealing procedure, preferably wherein the annealing procedure for the first metal layer (11) is different from the annealing procedure for the second metal layer (12).

**4.** The method according to one of the preceding claims, wherein the temperature-based treatment is, at least intermittently, carried out in an inert gas atmosphere or under vacuum.

**5.** The method according to one of the preceding claims, wherein the first metal layer (11) is joined to the second metal layer (12) using a DCB process.

**6.** The method according to one of the preceding claims, wherein the first metal layer (11) and/or the second metal layer (12) is oxidized prior to joining.

**7.** The method according to one of the preceding claims, wherein temperature control is adapted during temperature-based treatment of the second metal layer (12) to limit the second grain size, and/or the second metal layer (12) is coated with a paste of a metal and a metal oxide, especially copper and copper oxide.

**8.** The method according to one of the preceding claims, wherein the second metal layer (12) is joined to the ceramic layer (10) in the fabricated metal-ceramic substrate (1), wherein in the fabricated metal-ceramic substrate (1) a second grain size larger than the first grain size is realized in the second metal layer (12) by performing the annealing procedure prior to joining the first metal layer (11) to the second metal layer (12).

**Revendications**

1. Procédé de fabrication d'un substrat métallo-céramique, consistant à :

   - fournir une première couche métallique (11), en particulier une première couche de cuivre, et une seconde couche métallique (12), en particulier une seconde couche de cuivre,
   - relier la première couche métallique (11) et la seconde couche métallique (12) pour former le produit métallique semi-fini (2),

   dans lequel, temporellement avant que la première couche métallique (11) soit reliée à la seconde couche métallique (12), au moyen de différents traitements thermiques, une croissance des grains est initiée dans la première couche métallique (11) et/ou dans la seconde couche métallique (12) de telle sorte qu'une première taille de grain dans la première couche métallique (11) diffère d'une seconde taille de grain dans la seconde couche métallique (12), dans le substrat métal-cuivre fini (2), la première taille de grain finale et la seconde taille de grain finale n'étant réalisées que lors de la liaison du produit métallique semi-fini avec la couche céramique.

2. Procédé selon la revendication 1, dans lequel la première couche métallique (11) et la seconde couche métallique (12) sont faites du même matériau métallique, en particulier de cuivre.

3. Procédé selon l'une des revendications précédentes, dans lequel le traitement thermique est un procédé de recuit, et, de préférence, le procédé de recuit de la première couche métallique (11) diffère du procédé de recuit de la seconde couche métallique (12).

4. Procédé selon l'une des revendications précédentes, dans lequel le traitement thermique est réalisé au moins temporairement dans un environnement de gaz inerte ou sous vide.

5. Procédé selon l'une des revendications précédentes, dans lequel la première couche métallique (11) est reliée à la seconde couche métallique (12) au moyen d'un procédé DCB.

6. Procédé selon l'une des revendications précédentes, dans lequel la première couche métallique (11) et/ou la seconde couche métallique (12) sont oxydées temporellement avant la liaison.

7. Procédé selon l'une des revendications précédentes, dans lequel, pour limiter la seconde taille de grain, un contrôle de la température est adapté lors du traitement thermique de la seconde couche métallique (12), et/ou la seconde couche métallique (12) est revêtue d'une pâte d'un métal et d'un oxyde métallique, en particulier de cuivre et d'oxyde de cuivre.

8. Procédé selon l'une des revendications précédentes, dans lequel la seconde couche métallique (12) dans le substrat métallo-céramique fini (1) est liée à la couche céramique (10), et, dans le substrat métallo-céramique fini (1), une seconde taille de grain dans la seconde couche métallique (12), qui est plus grande que la première taille de grain, est réalisée par le processus de recuit, avant que la première couche métallique (11) soit reliée à la seconde couche métallique (12).

11

12

Fig. 1

12

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015224464 A1
- US 3744120 A
- DE 2319854 C